# EUROPEAN PATENT APPLICATION

(11) **EP 2 377 674 A1**
(43) Date of publication of application: **19.10.2011**
(21) Application number: 10004076.5
(22) Date of filing: 16.04.2010
(51) Int. Cl.: B29C 70/44, B29C 70/48, B29C 33/50, F03D 1/06, B29D 99/00

(54) **Method for manufacturing a wind turbine rotor blade and wind turbine rotor blade**

(71) Applicant: Siemens Aktiengesellschaft, 80333 München (DE)
(72) Inventor: Stiesdal, Henrik, 5000 Odense C (DK)

(57) **Abstract**

A method for manufacturing a wind turbine rotor blade (1, 100) is described, wherein composite material (16) is placed around a moulding core arrangement. The moulding core arrangement comprises a first moulding core (22) and a second moulding core (25). The composite material (16) is set forming a wind turbine rotor blade (1, 100). The wind turbine rotor blade (1, 100) comprises a root portion (3) and a shoulder portion (4). The first moulding core (22) is removed from the wind turbine rotor blade (1, 100) through an opening (31) at the root portion (3). The second moulding core (25) is removed from the wind turbine rotor blade (1, 100) through an opening (33) at the shoulder portion (4).

## Description

The present invention relates to a method for manufacturing a wind turbine rotor blade and wind turbine rotor blade.

Different methods for making wind turbine rotor blades are known. Thus it is known that wind turbine rotor blades may be made by winding roving tapes or roving bundles around a core or mandrel. It is also known from prior art that rotor blades may be made by a method where a blade is usually made with two half-shells which are joined at leading and trailing edges by bonding. The half-shells are usually supported inside the blade cavity by one or more beams, which are also joined to the half-shells by bonding, where the beams e.g. may be made in U- or I-shape so that the flanges of these beams form contact surfaces with the half-shells, or where the beams e.g. may be made by winding so that a part of the external surface of the winded beam forms contact surfaces towards the half-shells.

Moreover it is known from the disclosure of EP 1 310 351 to make the rotor blade in one piece in a closed mould. Furthermore from EP 1 109 657 it is known to produce composite materials in partly closed structures containing cavities such as wind turbine rotor blades. Here fibre reinforced material is placed around at least one moulding core or mandrel which, after moulding the said reinforced material, is removed from the partly closed structure. The moulding core or mandrel consists of a core outer part made of a flexible material. The core outer part is filled with a mouldable and extractable filling material. Filling material is emptied from the said core outer part after casting.

One present method used for manufacturing wind turbine rotor blades, involves two moulding cores or mandrels somewhat similar to the ones disclosed in EP 1 109 657, but comprising a substantial solid core surrounded by flexible filling material. Each of these moulding cores has a suitable shape so as to fit the blade shell on each side of the supporting web along the longitudinal axis of the blade. A further difference to the method disclosed in EP 1 109 657 is that the filling material alone is not extracted separately after casting but rather the whole moulding core including the core outer part, said substantial solid core and the flexible filling material, is extracted as a whole. Unfortunately, as the form of the trailing section of the blade is very curved, especially near the blade root at the blade "shoulder", the fraction of said flexible filling material of the moulding core along this side of the web must be high, in order be able to compress the moulding core sufficiently as to remove the moulding core from the cavity after moulding the rotor blade.

One further aspect related to this process is the difficulty of removing the moulding core from the cavity after moulding e.g. if the moulding core at some areas is stuck to the fibre reinforced material and especially around the blade-shoulder area.

Therefore, it is a first objective of the present invention to provide an advantageous method for manufacturing a wind turbine rotor blade which overcomes the mentioned difficulties. It is a second objective of the present invention to provide an advantageous wind turbine rotor blade.

The first objective is solved by a method for manufacturing a wind turbine rotor blade as claimed in claim 1. The second objective is solved by a wind turbine rotor blade as claimed in claims 12 and 15. The depending claims define further developments of the invention.

In the inventive method for manufacturing a wind turbine rotor blade composite material is placed around a moulding core arrangement. The moulding core arrangement comprises a first moulding core and a second moulding core. Then, the composite material is set or cured or hardened forming a wind turbine rotor blade. The wind turbine rotor blade comprises a root portion and a shoulder portion. When the composite material is set or cured or hardened, the first moulding core is removed from the wind turbine rotor blade through an opening at the root portion. The second moulding core is removed from the wind turbine rotor blade through an opening at the shoulder portion. The inventive method has the advantage, that by removal of the moulding core arrangement, the moulding core arrangement does not need to be compressed much to be able to remove it from its cavity.

Generally, the first moulding core and/or the second moulding core may comprise a solid core surrounded by flexible filling material. For example, the first moulding core and/or the second moulding core may comprise a solid core surrounded by a flexible core outer part which is filled with flexible filling material. The flexible filling material can be removed from the wind turbine rotor blade before removing the first and/or second moulding core.

Furthermore, it is possible that the moulding core arrangement, especially the first moulding core and/or the second moulding core, can be designed of a high fraction of solid material and only a small fraction of flexible material. For example, a substantial solid core material can be used.

Preferably, the composite material can comprise fibre reinforced material, for example glass fibre reinforced epoxy or polyester. Generally, the composite material can be arranged in a laminate structure.

The wind turbine rotor blade can comprise a trailing edge, a court direction, a span direction and a supporting web or shear web. The supporting web can be positioned along the span direction in a plane perpendicular to a court direction. The supporting web may comprise a trailing edge side facing towards the trailing edge. The first moulding core can advantageously be placed adjacent to the supporting web at the trailing edge side. The second moulding core can be placed distal to the supporting web and adjacent to the first moulding core.

Moreover, the wind turbine rotor blade may comprise a leading edge, a chord direction, a span direction and a supporting web or shear web. The supporting web can be positioned along the span direction in a plane perpendicular to the chord direction. The supporting web may comprise a leading edge side facing towards the leading edge. A third moulding core may advantageously be placed adjacent to the supporting web at the leading edge side. Preferably, the third moulding core can be removed from the wind turbine rotor blade through an opening at the root portion, when the composite material is set or cured or hardened.

In the context of the present invention the step of setting the composite material is used as a term or designation for hardening the composite material and/or curing the composite material and/or transforming the formerly flexible composite material into a solid or stiff state.

After removing the second moulding core from the wind turbine rotor blade through the opening at the shoulder portion the opening at the shoulder portion can be closed, for example by means of a hatch and/or a cap and/or a cover and/or a face plate or any other suitable means.

The wind turbine rotor blade may comprise a leading edge and a trailing edge and the first moulding core and/or the second moulding core and/or a third moulding core, which may be the formerly mentioned third moulding core, can each comprise a root end and a tip end. The first moulding core and/or the second moulding core and/or the third moulding core can further comprise a diameter in a plane connecting the leading edge and the trailing edge of the wind turbine rotor blade. This diameter advantageously decreases from the root end to the tip end of the particular moulding core. A decreasing diameter of the particular moulding core from the root end to the tip end enables an easy removing of the moulding core from the wind turbine rotor blade. Advantageously, at least a solid core portion of the first moulding core and/or the second moulding core and/or the third moulding core comprises a decreasing a diameter from the root and to the tip end.

In a further variant the composite material and the core arrangement are placed inside outer mould parts for formation of a mould cavity. Then, vacuum is applied to the mould cavity and matrix material, for example resin, is injected into the mould cavity. After injecting the matrix material the composite material is cured or set. Then, the outer mould parts can be removed and the core arrangement can be taken out of the rotor blade before or after removing the outer mould parts. The first moulding core is removed through an opening at the root portion and the second moulding core is removed through an opening at the shoulder portion.

The inventive wind turbine rotor blade according to claim 12 comprises a shoulder portion and an opening at the shoulder portion. The opening at the shoulder portion can be closed, for example by means of a hatch and/or a cap and/or a cover and/or a faceplate. Preferably, the closed opening can be reopened, for instance in case of service or inspection activities. The opening provides an easy and comfortable access to the inside of the blade at the shoulder, which is typically difficult to inspect.

In the context of the present invention the shoulder is defined as the portion at the trailing edge with the maximum chord length. The shoulder portion is defined as the portion along the trailing edge extending from the blade root to a point at the trailing edge between the shoulder and the tip where the chord length has a value of 70% of the maximum chord length.

The inventive wind turbine rotor blade according to claim 15 is manufactured by a previously described inventive method.

The present invention differs from known art in the design of the moulding core arrangement and in how it is removed from the cavity. The design differs in that the moulding core arrangement is divided in at least two moulding cores and the removal differs in that the said two moulding cores are removed from the cavity through separate openings i.e. through the blade root and through a formed opening in the rotor blade at the blade shoulder. The technical effect of these differences is to facilitate an advantageous procedure for removal of the moulding core(s) from the cavity.

Further features, properties and advantages of the present invention will become clear from the following description of an embodiment in conjunction with the accompanying drawings. All mentioned features are advantageous alone and in any combination with each other.
- Figure 1: schematically shows a wind turbine rotor blade in a plan view on the plane defined by the blade's span and the blade's chord.
- Figure 2: schematically shows a chord-wise cross section through the rotor blade's airfoil section.
- Figure 3: schematically shows the chord-wise cross section through the rotor blade's airfoil section along III-III in Figure 1 filled with moulding cores.
- Figure 4: schematically shows a wind turbine rotor blade with moulding cores in a sectional view on a plane defined by the blade's span and the blade's chord.
- Figure 5: schematically shows a moulding core in a sectional view along its longitudinal axis.
- Figure 6: schematically shows a modified wind turbine rotor blade without supporting web and with moulding cores in a sectional view on a plane defined by the blade's span and the blade's chord.

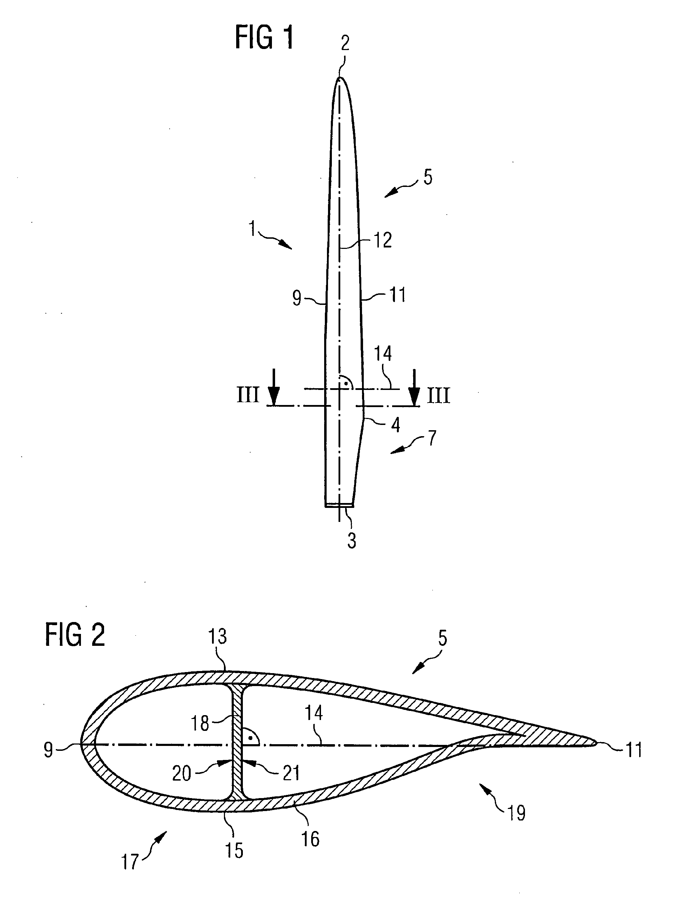

An embodiment of the present invention will now be described with reference to Figures 1 to 6.

Figure 1 shows a rotor blade in a plan view on the plane defined by the blade's span and the blade's chord. Figure 1 shows a wind turbine blade 1 as it is usually used in a three-blade rotor. However, the present invention shall not be limited to blades for three-blade rotors. In fact, it may as well be implemented in other rotors, e.g. one-blade rotors or two-blade rotors.

The rotor blade 1 shown in Figure 1 comprises a root portion 3 with a cylindrical profile and a tip 2. The tip 2 forms the outermost part of the blade 1. The cylindrical profile of the root portion 3 serves to fix the blade 1 to a bearing of a rotor hub. The rotor blade 1 further comprises a so-called shoulder 4 which is defined as the location of its maximum profile depth, i.e. the maximum chord length of the blade. Between the shoulder 4 and the tip 2 an airfoil portion 5 extends which has an aerodynamically shaped profile. Between the shoulder 4 and the cylindrical root portion 3, a transition portion 7 extends in which a transition takes place from the aerodynamic profile of the airfoil portion 5 to the cylindrical profile of the root portion 3.

The rotor blade 1 comprises a span 12 which extends from the blade root 3 to the tip 2. A chord direction 14 is orientated perpendicular to the span 12.

A chord-wise cross section through the rotor blade's airfoil section 5 is shown in Figure 2. Their aerodynamic profile shown in Figure 2 comprises a convex suction side 13 and a less convex pressure side 15. The dash-dotted line 14 extending from the blade's leading edge 9 to its trailing edge 11 shows the chord of the profile. Although the pressure side 15 comprises a convex section 17 and a concave section 19 in Figure 2, it may also be implemented without a concave section at all as long as the suction side 13 is more convex than the pressure side 15.

The suction side 13 and the pressure side 15 in the airfoil portion 5 will also be referred to as the suction side and the pressure side of the rotor blade 1, respectively, although, strictly spoken, the cylindrical portion 3 of the blade 1 does not show a pressure or a suction side.

The rotor blade 1 comprises a laminated structure 16 and a shear web or supporting web 18. The supporting web 18 extends along a plane perpendicular to the chord direction 14. The supporting web 18 comprises a leading edge side 20 and a trailing edge side 21. The leading edge side 20 is facing towards the leading edge 9 and the trailing edge side 21 is facing towards the trailing edge 11.

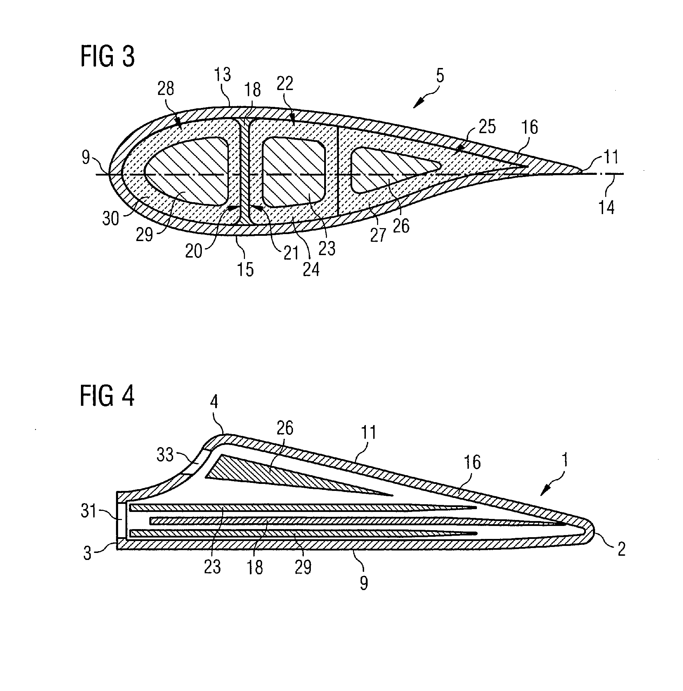

Figure 3 schematically shows a cross section along III-III in Figure 1. The cross section is taken at the airfoil portion 5 close to the shoulder 4, in other words at the shoulder portion.

Inside of the rotor blade 1 a moulding core arrangement comprising a first moulding core 22, a second moulding core 25 and a third moulding core 28 are placed. The third moulding core 28 is located adjacent to the leading edge side 20 of the supporting web 18. The first moulding core 20 is located adjacent to the trailing edge side 21 of the supporting web 18. The second moulding core 25 is located distal from the supporting web 18 and adjacent to the first moulding core 20. The second moulding core 25 is located close to the trailing edge 11 at the shoulder portion 4.

Each of the mentioned moulding cores comprises a solid core surrounded by a flexible core outer part. The flexible core outer part is filled with a flexible filling material. This means, that the first moulding core 22 comprises a solid core 23 surrounded by flexible filling material 24, the second moulding core 25 comprises a solid core 26 surrounded by flexible material 27 and the third moulding core 28 comprises a solid core 29 surrounded by flexible filling material 30.

Figure 4 schematically shows the wind turbine rotor blade 1 in a sectional view along a plane defined by the blade's span 12 and the blades chord 14. Figure 4 schematically shows a possible arrangement of the moulding cores 22, 25 and 28 inside of the rotor blade 1. In Figure 4 only the solid cores 23, 26 and 29 of the moulding cores are shown. This schematically illustrates the situation after setting or curing or hardening the composite material 16 and after possibly removing the flexible filling material 27, 24 and 30 from the flexible core outer part. If the filling material is not removed from the core outer part, then the core outer part with the flexible filling material is compressed during removing the moulding core 22, 25 and 28 from the rotor blade 1. In this case in figure 4 the core outer part is omitted for simplification.

The blade root portion 3 comprises an opening 31. Moreover, the rotor blade 1 comprises an opening 33 at the shoulder portion 4. After setting or curing or hardening the composite material 16 and optionally after removing the filling material 24, 27 and 30, the moulding cores 22, 25 and 28 can be removed from the rotor blade 1 through the openings 31 and 33. The third moulding core 28 and the first moulding core 22 can be removed through the opening 31. The second moulding core 25 can be removed through the opening 33 at the shoulder portion 4. After removing the second moulding core 25 the opening 33 at the shoulder portion 4 is preferably closed by means of a hatch, a cap, a cover or any other suitable means.

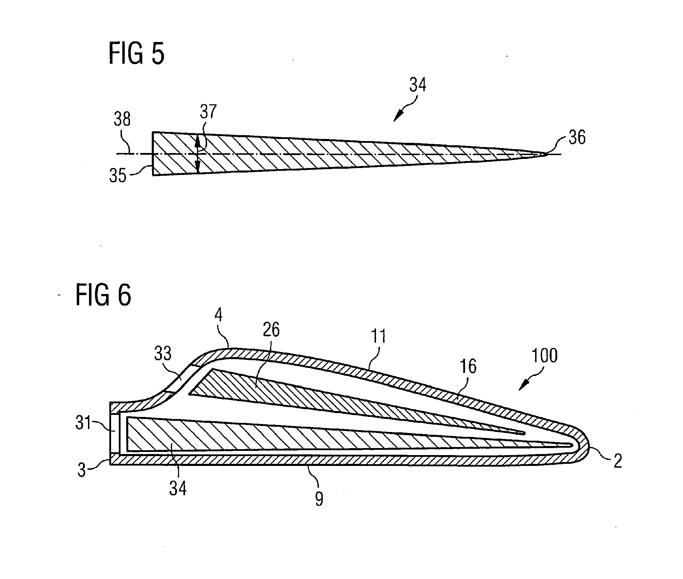

A preferred design of the solid cores 23, 26 and 29 of the moulding cores 22, 25 and 28 is schematically shown in Figure 5. Figure 5 schematically shows a moulding core 34 or a solid core of a moulding core in a sectional view along the longitudinal axis 38 of the moulding core 34. The moulding core 34 represents the solid core of the first moulding core or of the second moulding core or of the third moulding core. The moulding core 34 comprises a root end 35 and a tip end 36. When the moulding core 34 is placed inside of a rotor blade 1, the moulding core 34 is placed such that the root end 35 is located close to the root portion 3 and a tip end 36 is located close to the tip 2. Moreover, the moulding core 34 comprises a diameter 37 perpendicular to the longitudinal axis 38. The diameter 37 is measured in a plane defined by the leading edge 9 and the trailing edge 11 of the rotor blade 1. Preferably the diameter 37 is decreasing from the root end 35 to the tip end 36. This provides for an easy removing of the moulding core 34 from the rotor blade 1 through the respective opening 31, 32 or 33.

Figure 6 schematically shows a modified wind turbine rotor blade 100 without supporting web and with moulding cores in a sectional view on a plane defined by the blade's span and the blade's chord. In the example shown in figure 6 the first moulding core and the third moulding core of figure 4 are replaced by one moulding core 34, which corresponds to the first moulding core of the inventive method. The moulding core 34 can be removed through the opening 31. The second moulding core 25 can be removed through the opening 33 at the shoulder portion 4.

Generally, fibre reinforced material can be placed around at least a described moulding core arrangement comprising a first and a second moulding core or mandrel. After moulding the said reinforced material, the moulding core arrangement is removed from the partly closed structure. The moulding core or mandrel may comprise of a core outer part made of a flexible material. The core outer part is filled with a mouldable and extractable filling material. Filling material can be emptied from the said core outer part after casting.

## Claims

1. A method for manufacturing a wind turbine rotor blade (1, 100), wherein
- composite material (16) is placed around a moulding core arrangement, which comprises a first moulding core (22) and a second moulding core (25),
- the composite material (16) is set forming a wind turbine rotor blade (1, 100), comprising a root portion (3) and a shoulder portion (4),
- the first moulding core (22) is removed from the wind turbine rotor blade (1, 100) through an opening (31) at the root portion (3),
**characterised in that**
the second moulding core (25) is removed from the wind turbine rotor blade (1, 100) through an opening (33) at the shoulder portion (4).

2. The method as claimed in claim 1,
**characterised in that**
the first moulding core (22) and/or the second moulding core (25) comprise a solid core (23, 26) surrounded by flexible filling material.

3. The method as claimed in claim 1 or 2,
**characterised in that**
the first moulding core (22) and/or the second moulding core (25) comprise a solid core (23, 26) surrounded by a flexible core outer part (24, 27) which is filled with flexible filling material.

4. The method as claimed in claim 2 or 3,
**characterised in that**
the flexible filling material is removed from the wind turbine rotor blade (1, 100) before removing the first moulding core (22) and/or second moulding core (25).

5. The method as claimed in any of the claims 1 to 4, **characterised in that**
the composite material (16) comprises fibre reinforced material.

6. The method as claimed in any of the claims 1 to 5, **characterised in that**
the wind turbine rotor blade (1, 100) comprises a trailing edge (11), a chord direction (14), a span direction (12) and a supporting web (18); the supporting web (18) is positioned along the span direction (12) in a plane perpendicular to the chord direction (14); the supporting web (18) comprises a trailing edge side (21) facing towards the trailing edge (11); the first moulding core (22) is placed adjacent to the supporting web (18) at the trailing edge side (21) and the second moulding core (25) is placed distal to the supporting web (18) and adjacent to the first moulding core (22).

7. The method as claimed in any of the claims 1 to 6, **characterised in that**
the wind turbine rotor blade (1, 100) comprises a leading edge (9), a chord direction (14), a span direction (12) and a supporting web (18); the supporting web (18) is positioned along the span direction (12) in a plane perpendicular to the chord direction (14); the supporting web (18) comprises a leading edge side (20) facing towards the leading edge (9); and a third moulding core (28) is placed adjacent to the supporting web (18) at the leading edge side (20).

8. The method as claimed in any of the claims 1 to 7, **characterised in that**
after removing the second moulding core (25) from the wind turbine rotor blade (1, 100) through the opening (33) at the shoulder portion (4) the opening (33) at the shoulder portion (4) is closed.

9. The method as claimed in claim 8,
**characterised in that**
the opening (33) at the shoulder portion (4) is closed by means of a hatch and/or a cap and/or a cover and/or a faceplate.

10. The method as claimed in any of the claims 1 to 9, **characterised in that**
the wind turbine rotor blade (1, 100) comprises a leading edge (9) and a trailing edge (11); and the first moulding core (22) and/or the second moulding core (25) and/or a third moulding core (28) comprise a root end (35), a tip end (36) and a diameter (37) in a plane connecting the leading edge (9) and the trailing edge (11); the diameter (37) decreases from the root end (35) to the tip end (36).

11. The method as claimed in any of the claims 1 to 10, **characterised in that**
the composite material (16) and the core arrangement are placed inside mould parts for formation of a mould cavity, vacuum is applied to the mould cavity and matrix material is injected into the mould cavity.

12. A wind turbine rotor blade (1, 100) comprising a shoulder portion (4),
**characterised in that**
it comprises an opening (33) at the shoulder portion (4).

13. The wind turbine rotor blade (1, 100) as claimed in claim 12,
**characterised in that**
the opening (33) at the shoulder portion (4) is closed.

14. The wind turbine rotor blade (1, 100) as claimed in claim 13,
**characterised in that**
the opening (33) at the shoulder portion (4) is closed by means of a hatch and/or a cap and/or a cover and/or a faceplate.

15. A wind turbine rotor blade (1, 100),
**characterised in that**
it is manufactured by a method as claimed in any of the claims 1 to 11.
